# EUROPEAN PATENT APPLICATION

(11) **EP 3 695 958 A1**
(43) Date of publication of application: **19.08.2020**
(21) Application number: 19157224.7
(22) Date of filing: 14.02.2019
(51) Int. Cl.: B29C 73/02, B64F 5/40, F03D 80/50, B29C 73/26

(54) **REPAIR SOLUTION AND PROCESS FOR WIND TURBINE LEADING EDGE PROTECTION TAPE**

(71) Applicant: 3M Innovative Properties Company, Saint Paul, MN 55133-3427 (US)
(72) Inventor: Kühneweg, Bernd, 40468 Duesseldorf (DE); den Drijver, Andrea, 47445 Moers (DE)
(74) Representative: Müller, Bruno

(57) **Abstract**

The invention relates to a method for repairing a composite substrate (1) and a protection layer (2) comprising at least one thermoplastic polymer (3) and having at least one area of damage (5), the method comprising defining at least one area of the protection layer (2) to be repaired, optionally removing at least part of the damaged part of the protection layer (2), applying a reactive repair paste (7) to the area (5) to be repaired, wherein the reactive repair paste (7) comprises the same polymer composition as in the protection layer (2) and allowing the reactive repair paste (7) to cure.

## Description

### Field

The present disclosure relates to a method for repairing a surface of rotor blades, in particular wind turbines or helicopters or aircraft wings. The present disclosure relates to a method for repairing rotor blades comprising a protection layer. In addition, the present disclosure further relates to the use of a reactive repair paste for repairing a protection layer on the surface of rotor blades or aircraft wings.

### Background

It has long been known that objects made of polymeric of composite materials travelling at high speeds may suffer from erosion due to contact with dust, sand or even rain. In fact, this is well observed with regard to the leading edges of rotor blades of for example rotor blades of helicopters, wings of aircrafts, and, since their introduction, rotor blades of wind turbines. Erosion, in particular rain erosion, can not only be detrimental to the structural integrity or optical integrity or optical appearance of the objects concerned, but also have negative impact on the aerodynamic profile of rotor blades and wings. While it is obvious that this means an undesired deterioration of aerodynamic efficiency of aircraft wings and helicopter rotor blades, it must be stressed that this is also of great concern when running a wind turbine. This circumstance is even aggravated due to the ever increasing size of wind turbines and the corresponding rotor blades, since an increase in size has the consequence of an increase in speed at which a particular point on the leading edge of the rotor blade travels. In particular, at the leading edges closer the tip of the blade speeds are achieved at which rain erosion represents a problem.

Thus, counter-measures were developed, *inter alia*, the application of protection tapes over the leading edges of rotor blades of wind turbines and helicopters. These protection tapes are well-known in the art. Often, polyurethane tapes are used, which are also in most cases equipped with a pressure-sensitive adhesive (PSA) layer for affixing the tape to the rotor blade. Another well-known solution to protect leading edges of rotor blades of wind turbines and helicopters are protection coatings that get applied onto for example the leading edge as a liquid and cure after their application.

However, these tapes or coatings are also prone to erosions such as rain erosion and therefore need to be replaced from time to time. Clearly, when undergoing repair, the operation of helicopters and particularly wind turbines must be suspended, which directly means a loss of output of electric energy and a corresponding economic loss. Thus, repair times should be as short as possible, giving rise to a demand for cost- and time-efficient repair measures and equipment which is easy to apply. Moreover, erosion or damage may not only appear on the complete leading edge of rotor blades or wings but may also be present at small or limited localizations on the edge. Hence, it may be desirable not to remove all of the protection tape or coating, but only repair the damaged or eroded parts. Finally, it may also be desirable that the repaired area exhibits the same erosion protection as the original protection layer. Also, repair of small areas may be necessary because of transportation damages.

In summary, without wanting to deny the advantages and processes in the art in this regard, there still exists a need for new methods for repairing erosion protection layers (tapes or coatings), in particular on leading edges of rotor blades, in particular of wind turbines and helicopters as well as aircraft wings. There exists also a need for new methods for repairing smaller damages, like punctures, tears, cuts or gaps in erosion protection tapes.

### Summary

In one aspect of the present invention, there is provided a method for repairing a surface of rotor blades or aircraft wings, comprising;
a. a composite substrate; and
b. a protection layer comprising at least one thermoplastic polymer and having at least one area of damage,
   the method comprising
   i. defining at least one area of the protection layer to be repaired;
   ii. optionally removing at least part of the damaged part of the protection layer;
   iii. applying a reactive repair paste to the area to be repaired, wherein the reactive repair paste comprises the same polymer composition as the protection layer, and
   iv. allowing the reactive repair paste to cure.

In another aspect of the present invention, there is provided a use of a two-component polyurethane composition as a repair paste for repairing a protection layer comprising;
a. a composite substrate;
b. and a protection layer comprising at least one thermoplastic polymer and having at least one area of damage
   on the surface of rotor blades or aircraft wings.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also, herein, recitation of ranges by endpoints includes all numbers subsumed within that range (e. g., 1 to 10 includes 1.4, 1.9, 2.33, 5.75, 9.98, etc.). Also, herein, recitation of "at least one" includes all numbers of one and greater (e. g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items.

Amounts of ingredients of a composition may be indicated by % by weight (or "% wt". or "wt.-%") unless specified otherwise. The amounts of all ingredients give 100 % wt. unless specified otherwise. If the amounts of ingredients is identified by % mole the amount of all ingredients gives 100 % mole unless specified otherwise.

Unless explicitly stated otherwise, all embodiments of the present disclosure can be combined freely.

The method of the invention gives rise to a combination of effects desirable for the repair and maintenance of rotor blades or aircraft wings, such as rotor blades of wind turbines or helicopters. In particular, the reactive repair paste in the method as described herein enables the skilled person to quickly repair localized parts of damaged protective layers on substrates. For example, in one step of the method, the area to be repaired is defined. This gives the skilled person a fast and accurate visual indication of the area to be repaired. In another step of the method, the reactive repair paste is allowed to cure. This may take less than an hour, whilst steps in other repair methods are known to take much longer. The polymer in the reactive repair paste and the polymer in the polymer layer may comprise the same or a similar polymer composition. This allows for an improved bond between the undamaged part and the repaired part therefore providing better erosion properties. In addition, the repaired part of the protection layer may exhibit the same erosion protective properties as the original undamaged part. Thus, the presently described method is suited for efficiently repairing damaged parts of erosion protection layers of aircraft wings or rotors of helicopters and wind turbines, respectively.

Generally, the present method relates to repairing the surface of aircraft wings and rotor blades of helicopters and wind turbines. Preferably, the method according to the present disclosure is applied for repairing the surface of rotor blades of wind turbines, in particular the leading edges of wind turbines.

The rotor blades and the aircraft wings as used herein generally comprise a composite substrate, one or several coatings, and a protection layer disposed thereon. In most cases, the protection layer will be located on the leading edge of these substrates, since erosion and rain erosion take part mostly on these areas. The composite substrates itself may consist of composite materials commonly known and used in the art for rotor blades of helicopters and wind turbines as well as aircraft wings. For example, a composite material may be obtained by curing an epoxy or phenoxy resin enforced by fibers or a woven or non-woven fabric or may contain polyurethane enforced with non-woven or woven fabrics. Fibers and fabrics obtained therefrom may be selected from polymeric fibers, glass fibers, metal fibers, and carbon fibers, dependent on the selected property and price of the desired application. In general, on top of the composite substrate, at least one coating is applied. These coatings may be referred to as top coat or hard coat and may comprise at least one filler material to obtain an even surface and at least one top coat obtained from polyurethanes (often applied as two-component system) and epoxy coating compositions known in the art for these purposes.

The protection layer disposed on the composite substrate may be obtained from an erosion protection tape known in the art. Such a tape may comprise a polymeric layer and a pressure sensitive adhesive (PSA) layer used for affixing the tape onto the substrate. The polymeric layer of the tape forming the protection layer may comprise, for example, polyurethane or a thermoplastic polyurethane (TPU). Erosion protection tapes are, for example, commercially available from 3M Germany GmbH under the trade designation Wind Protection Tape W8607 or W8750.

The protection layer disposed on the composite substrate may also be obtained from a protection coating. Such protection coatings are also known in the art. They may comprise a two-component polyurethane coating. Erosion protection coatings are, for example, commercially available from 3M Germany GmbH under the trade designation Wind Blade Protection Coating W4600 or W4601.

The protection layer of the substrate may exhibit at least one area of at least partial damage. Damage is either or both physical and chemical damage, however, in the present context physical damage is predominant. Physical damage is in most cases erosion caused by rain, dust, sand, or other particles. In any event, the nature and appearance of such damage is well-known to the skilled person. Moreover, also the coatings and substrate beneath the protection layer may be affected by physical damage such as rain erosion and the like. Damage comprises all kind of damages, in particular small, localized damage such as cracks or punctual damage, as well as damage in larger areas of several square centimetres. The current invention may be used for all these kind of damages.

In the first step of the method according to the present invention, at least one area of the protection layer to be repaired is defined. This may be done using a variety of methods such as using erasable ink or protective tape such as masking tape. This step of the method gives a better visual indication of where the area of damage is, and to make it more easily discernible to the eye of the user. If a tape is used a barrier is provided that helps to keep the repair material in the area of damage.

Optionally at least part of the damaged part of the protection layer, i. e. protection tape affixed to the substrate surface or the coating, is removed. Preferably, the complete damaged part of the protection layer is removed. Also, damaged top coatings, fillers, or other underlying layers may need to be removed. As appreciated by the skilled person, areas are cut with for example a knife or other cutlery and then the damaged parts are removed in strips or patches or as otherwise appropriate. Finally, the removal of protection layers or part of protection layers, or parts of or complete protection tapes or coating is well known in the art. It may not be necessary to remove any damaged part of the protection layer if, for example, the damage is a small cut in the protection layer and for example is under approximately 20 millimetres in width.

Next, a reactive repair paste is applied to the area to be repaired, wherein the polymer in the reactive repair paste comprises the same polymer composition as the protection layer.

The repair paste may for example be applied using two-component cartridge via a static mixer and subsequent use of a squeegee.

With regard to the term 'thermoplastic polymer' will be known to a person skilled in the art to also mean thermoplastic elastomer i. e. compounds behaving at room temperature similar to classic elastomers, but are mouldable into shape under addition of heat, i. e. which exhibit in addition to elastomeric properties thermoplastic behaviour.

Of particular importance is that polymer composition of the reactive repair paste comprises the same or a similar polymer composition as the protection layer. In other words for both polymer compositions (repair paste and protection layer) identical row materials are used. The only difference between the two polymers might be that different additives or different concentrations of additives are being used in order to influence the viscosity and the thixotropy of the materials. The polymer matrix of both polymers is the same.

After cure the reactive repair paste may comprise at least one thermoplastic polymer. The thermoplastic polymer of the cured repair solution is the same thermoplastic polymer as the thermoplastic polymer in the protection layer. This allows for an improved bond between the undamaged part and the repaired part therefore providing better erosion properties. In addition, the repaired part of the protection layer may exhibit the same erosion protective properties as the original undamaged part. Of further importance to the present disclosure is the elastomeric behaviour under ambient conditions, i. e. the ability to stretch or deform under physical influence and return to its original or near original shape. This has the benefit of creating a longer life and better physical range than other materials, which means that these materials may act as a protection layer for the composite substrate against physical influence such as raindrops, sand or dust particles impinging the substrate surface at high speeds.

The final step in the method is allowing the reactive repair paste to cure.

To increase the bond between the protection layer and the repair paste after cure the areas of damage may be prepared for the repair step after step ii, which is optionally removing at least part of the damaged part of the protection layer. The preparation may for example be a mechanical pre-treatment, e.g. an abrasive pre-treatment in order to prepare the surfaces to be repaired for a better bonding of the reactive repair paste. The preparation may also be a chemical pre-treatment, in which for example a solvent is used to clean and also swell the surfaces to be repaired which also leads to a better bonding. Another benefit of the above described pre-treatments is an improved erosion resistance as there is a good bond between the undamaged part and the repaired part. Also, the thermoplastic polymer from the thermoplastic reactive repair paste exhibits the same erosion properties as the thermoplastic polymer in the thermoplastic polymer layer.

The reactive repair paste may comprise a thermoplastic polymer after it has been cured. With providing a thermoplastic polymer the same kind of polymer as the polymer of the protection layer is provided. This provides the above mentioned advantages.

The reactive repair paste according to the invention may be a two-component polyurethane composition. It may also be an epoxy composition or any other curing compositions that - after cure - provides the above mentioned properties necessary for an effective protection of a surface of a rotor blade or aircraft wing.

The polymer in the protection layer and the polymer in the reactive repair paste comprise an isocyanate-reactive component and an isocyanate functional component. The isocyanate-reactive component may comprise a first component i) being a short chain hydroxyl-functional compound having two terminal (α-ω) hydroxyl groups, a molecular weight of less than 250 g/mole and containing at least 2 carbon atoms and a second component ii) comprising a high molecular weight hydroxyl-functional compound having two terminal (α-ω) hydroxyl groups and a molecular weight of at least 250 g/mol and comprising one or more units selected from oxyalkylene units and polyoxyalkylene units and wherein the isocyanate-functional component is an isocyanate prepolymer of the general formula NCO-ZNCO, wherein Z is a linking group comprising at least two urethane (-NH-CO-0-) units and additionally 15 one or more units selected from alkylenes, oxyalkylenes, polyoxyalkylenes, alkylene esters, oxyalkylene esters, polyoxyalkylene esters and combinations thereof. The above composition provides a very good protection against erosion.

The polymer composition of the protection layer and the polymer composition of the reactive repair paste may be selected from isocyanate functional oligomers and hydroxyl functional low, medium and long chain components.

In the at least one area of the protection layer to be repaired is defined in step i. of the claimed method for example by applying a tape such that the area of damage is surrounded. This also gives a better visual indication as to where the area of damage is if it is not easily discernible to the eye of the user. Another advantage of using a tape for surrounding the area to be repaired may be that it helps to keep the reactive repair paste in the damaged area and that it protects the undamaged areas from the reactive repair paste. With this there is no need to clean the undamaged areas. Using a tape for surrounding the area to be repaired is also that the thickness of the area to be repaired may be adapted. It is possible to make it thicker than surrounding undamaged areas therewith providing an additional protection of the surface of the rotor blade or the aircraft wing. It is also possible to define the area to be repaired with other means such as for example with removable ink.

It is of course also possible to apply the reactive repair paste without any tape surrounding the area to be repaired. The repair past may just be applied to the areas to be repaired for example by using a squeegee.

According to another embodiment, the steps of applying a reactive repair paste to the area to be repaired, wherein the reactive repair paste comprises the same polymer composition as the protection layer (step iii); and allowing the reactive repair paste to cure (step iv), are repeated until the cured repair paste fills the area of damage in the protection layer. Depending on the depth of the area to be repaired in the protection layer, sufficient further applications of the repair paste may be required to ensure there is even application between the protection layer in the non-damaged area and the cured repair paste in the area to be repaired. Further applications of the reactive repair paste should be made by visual inspection. As already described above, it is also possible to provide a thicker protection layer for the areas to be repaired to ensure a better future protection of these areas against erosion.

In another embodiment the tape is removed before the reactive repair paste is completely cured. This is to ensure there is a smooth transition between the protection layer and the repaired area with the cured repair paste. A smooth transition is achieved when the tape is removed because the not yet fully cured repair paste still is able to change its geometry so that potential sharp edges may disappear or may be smoothened by using additional tools like for example a squeegee or a flexible knife. This leads to a smooth transition between the cured repair paste and the protection layer. This provides better erosion resistance and less friction during movement of the aircraft wing or turbine blade.

As already mentioned above, the area to repair may be pre-treated for example with a mechanical treatment or a chemical treatment in order to enhance the connection between the repair paste and the protection layer. This improves erosion resistance as well.

In another embodiment the reactive repair paste applied in step ii. has a viscosity in the range of 4 to 100 Pa·s (measured according to DIN EN ISO 2884-1, cone-plate = C35/1°H, Diameter D=35 mm). This range of viscosity is to ensure the reactive repair paste can be applied to the damaged area and has a paste like consistency making application of the reactive repair paste easier to control. The viscosity may for example range from 4 to 20 Pa s measured at a shear rate of 100 1/s (according to DIN EN ISO 2884-1). The reactive repair paste may also have a viscosity in the range of 10 to 100 Pa s measured at a shear rate of 10 1/s (according to DIN EN ISO 2884-1). A viscosity in the above mentioned range ensures that the reactive repair paste can be applied to the damaged area and has a paste like consistency making application of the reactive repair paste easier to control, especially that it can easily be distributed into the areas to be repaired and that it stays in the areas in the applied geometry and does not flow away.

In another embodiment the reactive repair paste applied in step ii. has a curing speed in the range of 5 to 50 minutes at room temperature for example at 23°C, for example 20 to 40 minutes at room temperature for example at 23 °C. A curing speed in this range is advantageous because it allows for a fast repair process.

Another aspect of this invention is a use of a two-component polyurethane composition as a reactive repair paste for repairing a protection layer comprising:
a. a composite substrate; and
b. a protection layer comprising at least one thermoplastic polymer and having at least one area of damage,
on the surface of rotor blades or aircraft wings.

This provides efficient repair of damaged parts of erosion protection layers of aircraft wings or rotors of helicopters and wind turbines, respectively. The two-component polyurethane composition, that may develop thermoplastic properties after cure exhibit properties such as elasticity, transparency, and a certain resistance to oil, grease and abrasion, they are preferred as thermoplastic elastomers in the present disclosure.

All the features disclosed in connection with the method may also be combined with the use of a two-component polyurethane composition as a reactive repair paste for repairing a protection layer.

In another embodiment the protection layer is located on the leading edge of the rotor blade, preferably wherein the protection layer is a rain erosion protection layer. This is to ensure better erosion protection.

In another embodiment the two-component polyurethane composition has a viscosity in the range 4 to 100 Pa·s (measured according to DIN EN ISO 2884-1, cone-plate = C35/1°H, Diameter D=35 mm).

In another embodiment the two-component polyurethane composition has a curing speed in the range of 5 to 50 minutes at room temperature for example at 23 °C, for example between 20 and 40 minutes at room temperature for example at 23 °C.

### Drawings

The invention will now be described in more detail with reference to the following Figures exemplifying particular embodiments of the invention:
- Fig. 1: is a schematic drawing of a cross-section of a substrate and a protection layer with an area of partial damage;
- Fig. 2: is a schematic drawing of the substrate and protection layer of Fig. 1 with a masking tape on either side of the area of partial damage;
- Fig. 3: is a schematic drawing of the substrate and protection layer of Fig. 1 and 2 with a first application of a reactive repair paste;
- Fig. 4: is a schematic drawing of the substrate and protection layer of Fig. 1 and 2 after a second application of the reactive repair paste;
- Fig. 5: is a schematic of Fig. 4 after the reactive repair solution has almost been cured and
- Fig. 6: is a schematic drawing of Fig. 5 after the masking tape has been removed and the reactive repair solution has been fully cured.

Below various embodiments of the present invention are described and shown in the drawings wherein like elements are provided with the same reference numbers.

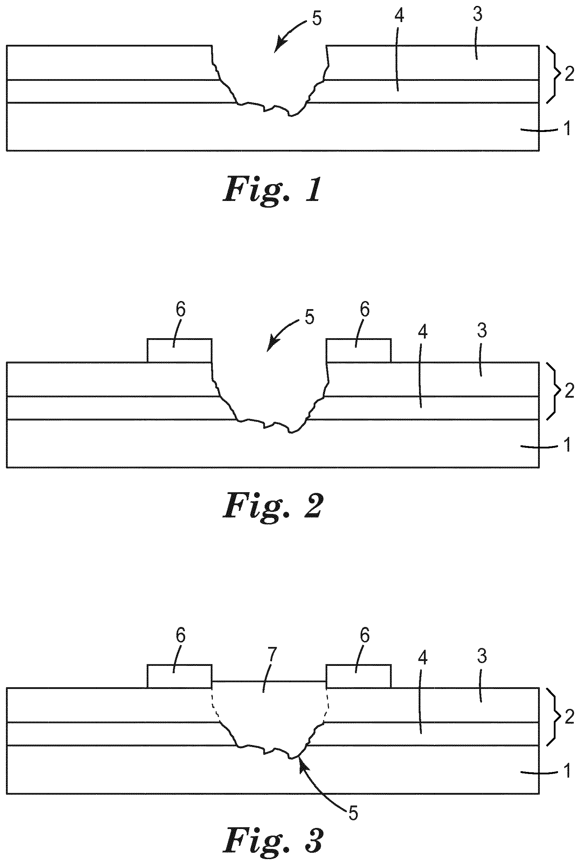

In Fig. 1, a cross section of substrate 1 with a protection layer 2 can be seen. The protection layer 2 comprises a polymer layer 3 and an adhesive layer 4, wherein the adhesive layer 4 is positioned between the polymer layer 3 and the substrate 1 and serves to adhere the polymer layer 3 to the surface of the substrate 1. The polymer layer 3 comprises a thermoplastic polyurethane. The adhesive layer 4 may for example be a pressure sensitive adhesive. Fig. 1 further shows an area of minor damage 5 in the protection layer 2. The damage affects the polymer layer 3, the adhesive layer 4 and the substrate 1. The protection layer 2 may also be a coating without an adhesive layer 4.

In Fig. 2, a masking tape 6 has been applied on top of the protection layer 2. It surrounds the damaged area 5 and therewith defines the damaged area 5.

In Fig. 3, a reactive repair paste 7 is applied to the area of damage 5 with for example a spatula or squeegee or a flexible knife (not shown in Fig. 3). The reactive repair paste 7 begins to cure. The repair paste 7 may provide the same thickness after the application as the protection layer 2 (not shown) or it may be thicker, as shown in Fig. 3. This may provide an additional advantage because a thicker protection layer may provide a better protection against erosion.

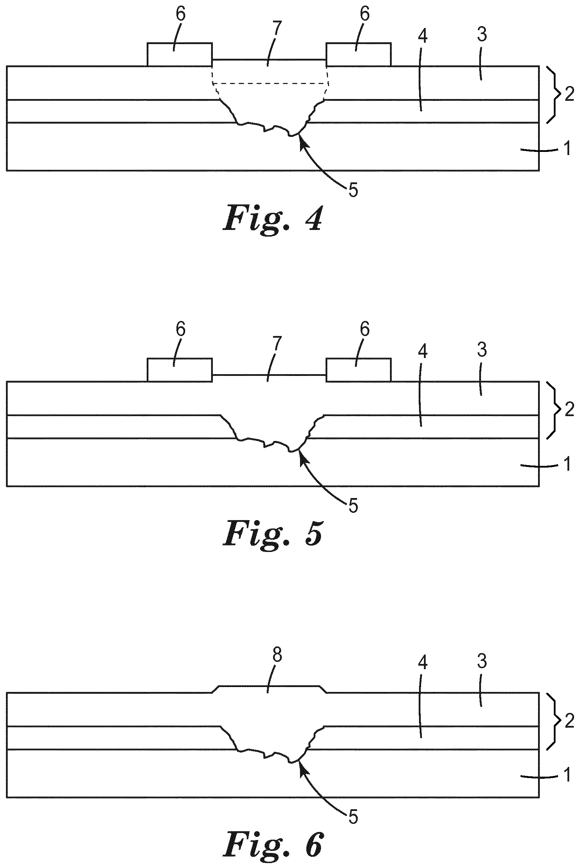

In Fig. 4, the reactive repair paste 7 may be applied once again with for example a spatula or squeegee or a flexible knife on top of the already cured repair paste or on top of the almost cured repair paste. The reactive repair paste 7 again begins to cure. The two layers of repair paste may provide the same thickness as the protection layer 2 (not shown) or it may be thicker, as shown in Fig. 3. This provides the same advantage as described above.

In Fig. 5, the reactive repair paste 7 is almost cured leaving behind a thermoplastic polymer 8 in the damaged area 5. The thermoplastic polymer from repair paste 7 and the thermoplastic polymer in polymer layer 3 provide a new protection layer. Both thermoplastic polymers comprise the same polymer composition. The masking tape 6 may be removed before the reactive repair paste 7 is fully cured. This is to ensure there is a smooth transition between the protection layer 2 and the repaired area 5 with the cured repair paste 7. A smooth transition is achieved when the tape is removed because the not yet fully cured repair paste 7 still is able to change its geometry so that potential sharp edges may disappear or may be smoothened by using additional tools like for example a squeegee or a flexible knife. This leads to a smooth transition between the cured repair paste 7 and the protection layer 2. This provides better erosion resistance and less friction during movement of the aircraft wing or turbine blade.

In Fig. 6, the reactive repair paste 7 is fully cured and the masking tape 6 has been removed to allow the repair paste 8 to cover the protection layer 2 so a smooth transition between the repair paste 8 and protection layer may be obtained.

It is also possible to use the method according to the invention for a protection layer 2 that does not provide an adhesive layer, e. g. a coating.

### Examples

The present disclosure is further described without however wanting to limit the disclosure thereto. The following example is provided to illustrate an embodiment but is not meant to be limiting in any way.

| **Formulations** | | | **Repair Paste** | | **Protection Coating** | |
|---|---|---|---|---|---|---|
| **OH-Component** | **MW** | **eq -weight** | **weight** | **eq1** | **weight** | **eq1** |
| **Pigment Paste 50% TiO2** | | 1125 | 45 | 0,04 | 45 | 0,04 |
| **Poly THF ® (tetrahydrofuran) 1000** | 1000 | 497 | 20,5 | 0,04 | 20,5 | 0,04 |
| **1,4 butanediol** | 90 | 45 | 3,3 | 0,07 | 3,3 | 0,07 |
| **Poly THF ® (tetrahydrofuran) 250** | 250 | 125 | 3,9 | 0,03 | 3,9 | 0,03 |
| **dibutyltin dilaurate** | | 0 | 0,5 | 0 | 0,5 | 0 |
| **Rheology Modifier** | | 0 | 8 | 0 | 4 | 0 |
| **UV Protection** | | 0 | 2 | 0 | 2 | 0 |
| | | | | | | |

| **NCO-Component** | **MW** | **eq -weight** | **weight** | **eq2** | **weight** | **eq2** |
|---|---|---|---|---|---|---|
| **Desmodur ® E305** | 984 | 328 | 65,4 | 0,2 | 65,4 | 0,2 |
| | | | | | | |
| **NCO/OH (eq2/eq1)** | | | | 1,1 | | 1,1 |
| **Total weight (g)** | | | 148,6 | | 144,6 | |

Wherein:
eq1 = OH-equivalent in mol
eq2 = NCO-equivalent in mol
eq-weight = equivalent weight in gram
MW = molecular weight in gram
weight = mass weight (Einwaagegewicht) in gram

| | | |
|---|---|---|
| **Application temperature** | 10-35°C | |
| **Curing time (Skin Dry)** | 20 min | 23 °C |
| **Curing time (through cure)** | 35 min | 23 °C |

### Preparation of substrate

A surface bearing a damaged thermoplastic protection layer with the above composition is cleaned and pre-treated. Pre-treating is done by sanding, which is a mechanical way of pre-treating the damaged area. A final treatment with isopropanol provides a well prepared surface.

The damaged areas will be surrounded with a masking tape to define the at least one area of the protection layer. In the next step the reactive repair paste with the above composition is applied to the area to be repaired such that the area is filled in an appropriate way. The repair paste may get applied with a flexible knife, which can also be used for smoothening the surface of the repair paste. The application of the repair paste and the smoothing may be repeated after the first layer of repair paste has been at least partially cured so that a required thickness of the repaired protection layer is achieved.

The repair paste has a curing time (skin dry) of 20 minutes at 23 °C. The repair past has a curing time (through cure) of 35 minutes at 23 °C.

The masking tape is removed before the repair paste is fully cured to ensure a smooth transition between the repair paste and the protection layer.

On visual inspection after final cure, the area of damage is visibly repaired and there is little visible difference between the previously damaged area and the undamaged area.

## Claims

1. A method for repairing a surface of rotor blades or aircraft wings, comprising
a. a composite substrate; and
b. a protection layer comprising at least one thermoplastic polymer and having at least one area of damage,
the method comprising
i. defining at least one area of the protection layer to be repaired;
ii. optionally removing at least part of the damaged part of the protection layer;
iii. applying a reactive repair paste to the area to be repaired, wherein the reactive repair paste comprises the same polymer composition as the protection layer; and
iv. allowing the reactive repair paste to cure.

2. The method according to claim 1, wherein the reactive repair paste comprises a thermoplastic polymer after it has been cured.

3. The method according to any of the preceding claims, wherein the reactive repair paste is a two-component polyurethane composition.

4. The method according to claim 1 or 2, wherein the polymer in the protection layer and the polymer in the reactive repair paste comprise an isocyanate-reactive component and an isocyanate functional component.

5. The method according to claim 1 or 2, wherein the polymer composition of the protection layer and the polymer composition of the reactive repair paste are selected from isocyanate functional oligomers and hydroxyl functional low, medium and long chain components.

6. The method according to any of the preceding claims, wherein the at least one area of the protection layer to be repaired is defined in step i. of the claimed method by applying a tape such that the area of damage is surrounded.

7. The method according to any of the preceding claims, wherein steps iii. and iv. of the claimed method are repeated until the cured reactive repair paste fills the area of damage in the protection layer.

8. The method according to any of the preceding claims, wherein the tape is removed before reactive repair paste is completely cured.

9. The method according to any of the preceding claims, wherein the reactive repair paste applied in step ii. has a viscosity in the range of 4 to 100 Pa·s (measured according to DIN EN ISO 2884-1, cone-plate = C35/1°H, diameter D=35 mm).

10. The method according to any of the preceding claims, wherein the reactive repair paste has a curing speed in the range of 5 to 50 minutes at 23 °C, for example between 20 and 40 minutes at 23 °C.

11. A use of a two-component polyurethane composition as a reactive repair paste for repairing a protection layer comprising;
a. a composite substrate; and
b. a protection layer comprising at least one thermoplastic polymer and having at least one area of damage,
on the surface of rotor blades or aircraft wings.

12. The use of claim 11, wherein the protection layer is located on the leading edge of the rotor blade, preferably wherein the protection layer is a rain erosion protection layer.

13. The use of claim 11, wherein the two-component polyurethane composition has a viscosity in the range of 4 to 100 Pa·s (measured according to DIN EN ISO 2884-1 cone-plate = C35/1°H, diameter D=35 mm).

14. The use of claim 12 of any of the preceding claims wherein the two-component polyurethane composition has a curing speed in the range of 5 to 50 minutes at 23 °C, for example between 20 and 40 minutes at 23 °C.
